# EUROPEAN PATENT APPLICATION

(11) **EP 3 160 204 A1**
(43) Date of publication of application: **26.04.2017**
(21) Application number: 14895322.7
(22) Date of filing: 19.06.2014
(51) Int. Cl.: H04W 72/08, H04W 84/18

(54) **WIRELESS COMMUNICATION SYSTEM, WIRELESS COMMUNICATION METHOD, WIRELESS DEVICE, AND WIRELESS BASE STATION**

(71) Applicant: Fujitsu Limited, Kawasaki-shi, Kanagawa 211-8588 (JP)
(72) Inventor: JITSUKAWA, Daisuke, Kawasaki-shi Kanagawa 211-8588 (JP); TANAKA, Yoshinori, Kawasaki-shi Kanagawa 211-8588 (JP)
(74) Representative: Lewin, David Nicholas
(86) International application number: PCT/JP2014/066341
(87) International publication number: WO 2015/194014

(57) **Abstract**

A first wireless device (20-3) that performs wireless communication with a wireless base station (10) transmits identification information of the first wireless device (20-3) using a radio resource allocated for device-to-device communication that is performed between the second wireless devices (20-1, 20-2) without going through the wireless base station (10).

## Description

### TECHNICAL FIELD

The embodiments discussed herein are related to a wireless communication system, a wireless communication method, a wireless device, and a wireless base station.

### BACKGROUND ART

In the standardization of the Long Term Evolution (LTE) or the LTE-Advanced of the 3rd Generation Partnership Project (3GPP), a device to device (D2D) communication is under discussion.

The D2D communication is an example of a technique in which wireless communication is directly performed between wireless devices such as mobile stations without going through a wireless base station. The D2D communication has been discussed as an example of alternative or auxiliary public safety communication in a scenario in which it is unable to use wireless communication (also referred to as "cellular communication") going through a wireless base station, for example, due to a large-scale disaster.

### LIST OF RELATED ART DOCUMENTS

### NON PATENT DOCUMENTS

Non-Patent Document 1: RP-122009, "Study on LTE Device to Device Proximity Services," Qualcomm, Dec. 2012.
Non-Patent Document 2: TR36.843 V0.3.1, "Study on LTE Device to Device Proximity Services - Radio Aspects," Nov. 2013.

### SUMMARY OF INVENTION

### PROBLEM TO BE SOLVED BY THE INVENTION

However, in the discussion related to the D2D communication, influence of interference between the cellular communication and the D2D communication has not sufficiently reviewed. For this reason, there are cases in which performance, characteristics, efficiency, and the like of the wireless communication system (also referred to collectively as "wireless communication performance") are lowered.

In one aspect, it is an object of the present invention to improve the wireless communication performance.

### MEANS TO SOLVE THE PROBLEM

In one aspect, in a wireless communication system (or a wireless communication method), a first wireless device that performs wireless communication with a wireless base station transmits identification information of the first wireless device using a radio resource allocated for device-to-device communication that is performed between the second wireless devices without going through the wireless base station.

Further, in one aspect, a wireless device includes a transmitter configured to transmit identification information of the wireless device using a radio resource allocated for device-to-device communication that is performed between other wireless devices without going through the wireless base station.

Further, in one aspect, a wireless device is a second wireless device that performs device-to-device communication with a first wireless device without going through a wireless base station and includes a receiver configured to receive identification information of a third wireless device that is transmitted by the third wireless device that performs wireless communication with the wireless base station using a radio resource allocated for the device-to-device communication.

Further, in one aspect, a wireless base station includes a receiver configured to receive the identification information of the third wireless device transmitted from the second wireless device and a controller configured to control a radio resource to be used to perform wireless communication with the wireless base station by the third wireless device identified by the identification information received by the receiver to a radio resource not overlapping with the radio resource allocated for the device-to-device communication.

### EFFECTS OF INVENTION

As one aspect, it is possible to improve the wireless communication performance.

### BRIEF DESCRIPTION OF DRAWINGS

Fig. 1 is a diagram illustrating an exemplary configuration of a wireless communication system according to a first embodiment.
Fig. 2A is a diagram schematically illustrating an example in which different frequency resources are used in D2D communication and cellular communication.
Fig. 2B is a diagram schematically illustrating an example in which the same frequency resources are used in D2D communication and cellular communication.
Fig. 3 is a diagram illustrating an example of a process of generating a transmission signal of a PDCCH in a wireless base station illustrated in Fig. 1.
Fig. 4 is a diagram illustrating a transmission timing of a PUSCH in a mobile station illustrated in Fig. 1.
Fig. 5 is a diagram schematically illustrating an example in which a mobile station that performs cellular communication in the wireless communication system illustrated in Fig. 1 transmits a discovery signal (DS).
Fig. 6 is a block diagram illustrating an exemplary configuration of the wireless base station illustrated in Figs. 1 and 5.
Fig. 7 is a block diagram illustrating an exemplary configuration of the mobile station illustrated in Figs. 1 and 5 that performs D2D communication.
Fig. 8 is a block diagram illustrating an exemplary configuration of the mobile station illustrated in Figs. 1 and 5 that performs cellular communication.
Fig. 9 is a sequence diagram illustrating an operation of the wireless communication system illustrated in Figs. 1 and 5 (a first interference prevention method).
Fig. 10 is a sequence diagram illustrating an operation of a wireless communication system according to a second embodiment (a second interference prevention method).
Fig. 11 is a flowchart illustrating an operation of a wireless communication system according to a third embodiment (a third interference prevention method).
Fig. 12 is a flowchart illustrating an operation of a wireless communication system according to a fourth embodiment (a fourth interference prevention method).

### MODE FOR CARRYING OUT THE INVENTION

Hereinafter, an exemplary embodiment of the present invention will be described with reference to the appended drawings. The following embodiment is merely an example and not intended to exclude the application of various modifications or techniques that are not explicitly described below. Further, various exemplary forms to be described below may be appropriately combined and carried out. In the drawings used in the following embodiment, the same reference numerals denote the same or similar parts unless otherwise set forth herein.

### (First embodiment)

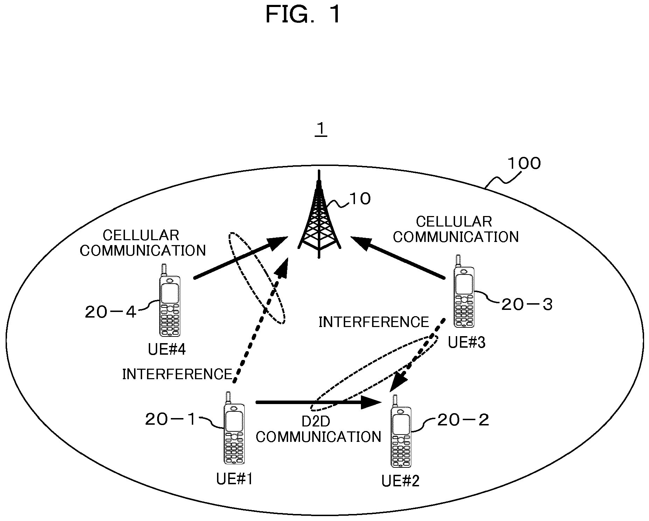

Fig. 1 is a diagram illustrating an exemplary configuration of a wireless communication system according to a first embodiment. A wireless communication system 1 illustrated in Fig. 1 includes, for example, one or more wireless base stations 10 and a plurality of mobile stations 20-1 to 20-N (#1 to #N) (N is an integer of 2 or larger). Here, Fig. 1 illustrates an example in which N=4, that is, four mobile stations 20-1 to 20-4 are arranged. When it is unnecessary to distinguish the mobile stations 20-1 to 20-N, they are also referred to simply as a "mobile station 20."

The wireless base station 10 forms a wireless area 100. The mobile station 20 located within the wireless area 100 can perform wireless communication with the wireless base station 10. The wireless base station 100 may form a plurality of wireless areas 100. The wireless area 100 is set according to an arrival range of a radio wave transmitted from the wireless base station 10. A maximum arrival range of the radio wave may be considered as being set according to maximum transmission power of the wireless base station 10.

The "wireless area" is also referred to as a "cell," a "coverage area," or a "communication area." The "cell" may be divided into "sector cells." The "cell" may include a macro cell or a small cell. The small cell is an example of a cell having a smaller radio wave arrival range (coverage) than the macro cell. A name of the small cell may differ according to the coverage area. For example, the small cell is also called a "femto cell," a "pico cell," a "micro cell," a "nano cell," a "metro cell," a "home cell," or the like.

The wireless base station 10 is also referred to as a "base station (BS)," a "node B (NB)," or an "evolved NB (eNB)."

The mobile station 20 is an example of a wireless device capable of performing wireless communication with the wireless base station 10 when located within the cell 100. The mobile station 20 may be also called a wireless apparatus, a mobile terminal, a terminal device, or a user equipment (UE). An example of the mobile station 20 is a mobile phone or a smart phone. However, the mobile station 20 may be a wireless device fixed to a mobile object such as a vehicle, an aircraft, or a ship. For example, the wireless device may include a sensor device or a meter (a measurement device) with a wireless communication function that forms a sensor network.

The wireless communication between the mobile station 20 and the wireless base station 10 is also referred to as "cellular communication." For example, a wireless communication scheme conforming to the LTE or the LTE-Advanced of the 3GPP may be applied as a wireless communication scheme of the cellular communication. Alternatively, a wireless communication scheme conforming to a scheme such as "Worldwide Interoperability for Microwave Access, (WiMAX)" (a registered trademark) may be applied to the wireless communication between the mobile station 20 and the wireless base station 10.

The wireless base station 10 may be connected to a core network which is not illustrated in Fig. 1 to be able to perform communication. The core network may include a serving gateway (SGW), a packet data network gateway (PGW), a mobility management entity (MME), and the like. A communication network including the core network is also referred to as an "access network." The access network is also referred to as an "Evolved Universal Terrestrial Radio Access Network (E-UTRAN)."

The wireless base station 10 may be connected with the core network, for example, via a wired interface. The wired interface is also referred to as an "S1 interface." However, the wireless base station 10 may be connected with the core network via a wireless interface to be able to perform communication.

The wireless base station 10 may be connected with another wireless base station 10 which is not illustrated in Fig. 1, for example, a wired interface to be able to perform communication. The wired interface is also referred to as an "X2 interface." However, the wireless base station 10 may be connected with another wireless base station via a wireless interface.

The wireless base station 10 allocates radio resources to the cellular communication with the mobile station 20 located within the cell 100 formed by its own station 10. The allocation of the radio resources is also referred to as "scheduling." The mobile station 20 performs the cellular communication with the wireless base station 10 using the radio resources allocated from the wireless base station 10.

The radio resources may be identified by, for example, a time and a frequency. For example, the radio resources may be identified in units of divisional resources obtained by dividing the radio resources available to the wireless communication system 1 according to a time and frequency. The divisional resources are also referred to as a "resource block (RB)" or also referred to as a "resource element (RE)."

The RE may be a minimum unit for the radio resource allocation and may be defined as, for example, a symbol of a subcarrier. A RE group (REG) may be formed by a plurality of REs. A RB may be formed by a plurality of REs. For example, a RB may be formed by 12 subcarriers in a frequency domain ×7 or 6 symbols in a time domain. The allocation (scheduling) of the radio resources may be performed in units of RBs.

The mobile station 20 can perform communication directly with another mobile station 20 without going through the wireless base station 10. This communication is also referred to as "device to device (D2D)" communication, "communication between wireless devices," or "direct communication between wireless devices." Fig. 1 schematically illustrates an example in which, for example, a part of a UE 20-1 and a UE 20-2 perform the D2D communication.

The D2D communication is useful in a scenario even in which the infrastructure of the cellular communication is operated. For example, the UE 20 can perform communication directly with a neighboring UE 20 without going through the wireless base station 10 at a remote site, and thus power consumption of the UE 20 can be reduced. Further, since traffic of the cellular communication is offloaded to the D2D communication, a load of the core network side can be reduced.

The radio resources used for the D2D communication may be also allocated by the wireless base station 10. The UE 20 performs the D2D communication with another UE 20 using the radio resources allocated from the wireless base station 10. The UE 20 that performs the D2D communication is also referred to as a "DUE" for the sake of convenience. On the other hand, the UE 20 that performs the cellular communication with the wireless base station 10 is also referred to as a "CUE" for the sake of convenience. The UE 20 may support both the cellular communication and the D2D communication.

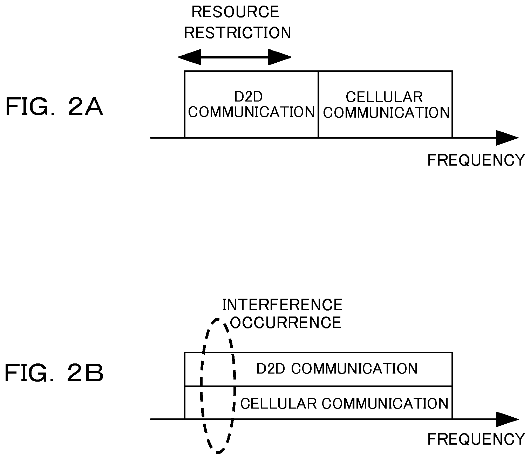

The allocation of the radio resources (for example, the frequency resources) used for the D2D communication and the cellular communication has tradeoff relation between a frequency use efficiency and interference. For example, when the frequency resources used for the D2D communication are different from the frequency resources used for the cellular communication as schematically illustrated in Fig. 2A, no interference occurs between the D2D communication and the cellular communication. However, since there is a limitation to available frequency resources, a system capacity of the wireless communication system 1 is likely to be reduced.

On the other hand, for example, when the same frequency resources are shared by the D2D communication and the cellular communication as schematically illustrated in Fig. 2B, available frequency resources are increased to be larger than in Fig. 2A. However, when the same frequency resources are allocated to the D2D communication and the cellular communication, interference is likely to occur between radio waves.

For example, a signal of the D2D communication may be transmitted using a frequency band allocated to uplink (UL) communication in cellular communication of Frequency Division Duplex (FDD). Thus, the D2D communication may interfere with the UL cellular communication.

For example, in Fig. 1, the same frequency resources are assumed to be allocated to the D2D communication between the DUE 20-1 and the DUE 20-2 and the UL cellular communication between the CUEs 20-3 and 20-4 and the wireless base station 10.

In this case, when the D2D communication and the cellular communication are performed with a small distance, the D2D communication and the cellular communication are likely to interfere with each other. For example, UL transmission (a transmission radio wave) from the CUE 20-3 to the wireless base station 10 is likely to interfere with a transmission radio wave from the DUE 20-1 to the DUE 20-2.

The transmission radio wave from the DUE 20-1 to the DUE 20-2 is likely to interfere with UL transmission (a transmission radio wave) from the CUE 20-3 to the wireless base station 10.

Further, since the CUE 20-4 that performs the cellular communication is located near a cell edge, when control of increasing the transmission power in the cellular communication is performed, the cellular communication serves as a large interference source on the D2D communication.

When the interference occurs, the wireless communication performance is consequently likely to be reduced, for example, the system capacity of the wireless communication system 1 is reduced.

In this regard, in the present embodiment, even when the same radio resources (for example, frequency band) are shared by the D2D communication and the cellular communication, it is possible to prevent the interference between the D2D communication and the cellular communication, and thus the system capacity is increased.

### (First interference prevention method)

For example, the DUE 20 that performs the D2D communication tries to detect the radio resources allocated from the wireless base station 10 to the CUE 20 that performs the cellular communication. When the radio resources are successfully detected, the DUE 20 does not perform (also referred to "inhibits") the D2D communication using the radio resources allocated to the CUE 20. The DUE 20 may perform the D2D communication using the radio resources different from the radio resources allocated to the CUE 20.

The detection of the radio resources allocated from the wireless base station 10 to the CUE 20 may be carried out, for example, by detecting (decoding) uplink (UL) transmission permission information in the cellular communication which is transmitted from the wireless base station 10 to the CUE 20. UL transmission permission information is also referred to as a "UL grant."

The UL grant is transmitted from the wireless base station 10 to the CUE 20, for example, through a downlink control channel (Physical Downlink Control Channel (PDCCH)). Control information indicating the "UL grant" may include, for example, information of the frequency resources to be used for transmission by the CUE 20 using an uplink shared channel (Physical Uplink Shared Channel, PUSCH) as downlink control information (DCI). In other words, the "UL grant" may include allocation information of UL radio resources for the CUE 20. A format of the control information indicating the "UL grant" is also referred to as "DCI format0" or "DCI format4."

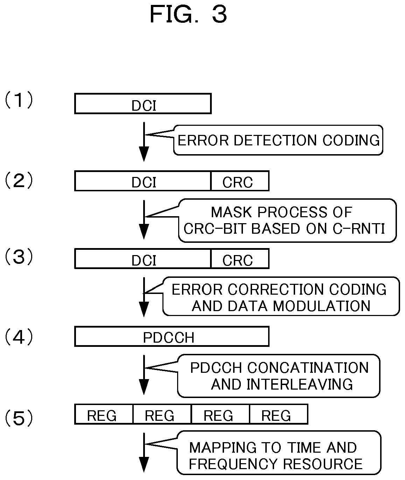

Fig. 3 illustrates an example of a process of generating a transmission signal of the PDCCH in the wireless base station 10. The wireless base station 10 performs error detection coding on the DCI and adds a Cyclic Redundancy Check (CRC) code (bit) to the DCI as illustrated in (1) to (2) of Fig. 3.

The CRC bit added to the DCI undergoes a mask process based on a bit expression of an identifier of the CUE 20 which is the destination of the PDCCH as illustrated in (2) to (3) of Fig. 3. The identifier of the CUE 20 may be, for example, a Cell-Radio Network Temporary Identifier (C-RNTI).

The C-RNTI is not a permanent identifier but an example of a temporary identifier allocated, for example, each time the CUE 20 transmits an access request to the wireless base station 10. For example, the C-RNTI may be allocated from the wireless base station 10 to the CUE 20 through a random access process when the CUE 20 performs random access to the wireless base station 10.

The DCI to which the CRC bit undergoing the mask process based on the C-RNTI is added undergoes error correction code and data modulation, and the transmission signal of the PDCCH is generated accordingly as illustrated (3) to (4) of Fig. 3.

The generated transmission signal of the PDCCH undergoes a concatenation with the transmission signal of the PDCCH addressed to another CUE 20, is interleaved, then mapped to the radio resources (REG) identified by the time and the frequency, and transmitted as illustrated (4) to (5) of Fig. 3.

When there is no notification indicating the radio resources for receiving the signal of the PDCCH from the wireless base station 10 from the wireless base station 10, the CUE 20 tries to decode the reception signal in a known search range (also referred to as "search space").

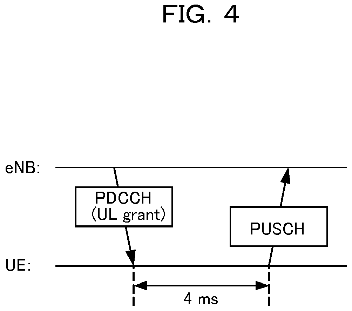

The CUE 20 removes the mask of the CRC bit using its own C-RNTI for the decoded result, and performs error detection. The decoded result having no error indicates the "UL grant." When the "UL grant" is successfully decoded, the CUE 20 transmits a signal of the PUSCH using the frequency resources indicated by the DCI after a certain period of time (for example, 4 ms) elapses after the "UL grant" is received, for example, as illustrated in Fig. 4.

As described above, the decoding process of the CUE 20 of the "UL grant" transmitted through the PDCCH includes a process of removing the mask of the CRC bit using the C-RNTI of the CUE 20. Thus, when the DUE 20 can acquire the C-RNTI of another CUE 20 that performs the cellular communication, the DUE 20 can decode the "UL grant" addressed to the CUE 20 by trying to decode the signal of the PDCCH addressed to the CUE 20 using the C-RNTI.

When the "UL grant" addressed to the CUE 20 is successfully decoded, the DUE 20 can detect the frequency resources allocated to the CUE 20. Thus, since the DUE 20 does not perform the D2D communication using the frequency resources allocated to the CUE 20, the interference between the D2D communication and the cellular communication can be prevented. The try to decode the signal (the UL grant) of the PDCCH transmitted to another CUE 20 through the DUE 20 is also referred to as "sniffering."

In order to make "sniffering " by the DUE 20 possible, for example, the CUE 20 that performs the cellular communication transmits the C-RNTI of the CUE 20 using the frequency resources (also referred to as "carriers") for the D2D communication allocated from the wireless base station 10.

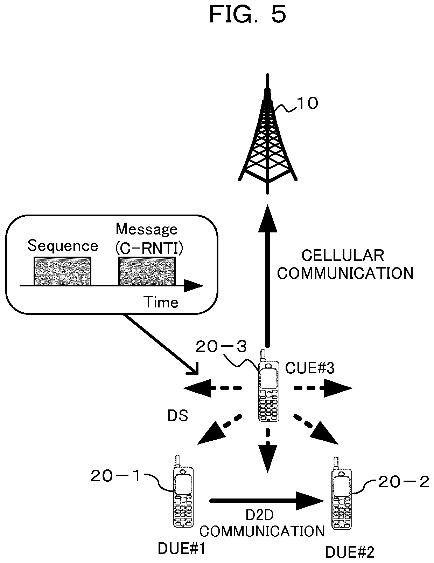

The C-RNTI may be included in a search signal for searching for the DUE 20 that performs the D2D communication as schematically illustrated in Fig. 5. The search signal is also referred to as a "discovery signal (DS)."

The DS is an example of a signal transmitted to search (discover) a neighboring DUE 20 and may be generated, for example, based on an identifier (a cell-specific ID) common to the CUEs 20 and transmitted through radio resources common to the CUEs 20.

The DS may be a signal in which a "sequence" and a "message" are transmitted in a time division manner as illustrated in Fig. 5.

The "sequence" is an example of a signal used for establishing a wireless link of the D2D communication and may be, for example, a correlation detection signal with a signal known between the DUEs 20. For example, a format such as a Physical Random Access Channel (PRACH) and a Sounding Reference Signal (SRS) may be used as a format of the "sequence."

The "message" is an example of a signal for transmitting control information and may be considered as being an example of information attached to the "sequence." For example, a format of the PUSCH may be used as a format of the "message." For example, control information transmitted using the "message" may be an information amount of about 100 bits. The "sequence" and the "message" may be transmitted through different physical channels.

A transmission frequency (or a transmission cycle) of the DS may be set to a frequency (or a cycle) at which a change in a position of the CUE 20 can be dealt with. The CUE 20 that transmits the DS may be all the CUEs 20 located within the cell 100 or may be limited to some CUEs 20. For example, the DS may be transmitted from only the CUEs 20 located at a position (for example, near the cell edge) distant from the wireless base station 100.

Since the CUE 20 located near the cell edge may function as a large interference source on surrounding D2D communication by control of increasing the transmission power of the cellular communication as described above, an interference prevent effect is expected by transmitting the DS to only the CUEs 20 located near the cell edge.

Meanwhile, the DUE 20 receives and detects the DS transmitted from the CUE 20. When the DUE 20 is able to receive and detect the DS, it indicates that the CUE 20 that transmits the DS may function as the interference source on the D2D communication of the DUE 20 that receives the DS. In other words, the DUE 20 can receive and detect only the DS transmitted from the CUE 20 that may function as the interference source on its own D2D communication.

Upon receiving the DS, the DUE 20 acquires the C-RNTI included in the "message" of the received DS. Thereafter, the DUE 20 can try to decode the "UL grant" transmitted from the CUE 20 through the PDCCH using the acquired C-RNTI.

The DUE 20 that has successfully decoded the "UL grant" does not perform the D2D communication using the frequency resources used for UL transmission by the destination CUE 20 of the "UL grant" through the PUSCH based on the allocation information of the UL frequency resources indicated in the "UL grant." In the data transmission (communication) of the D2D communication, a PUSCH-based signal may be transmitted and received.

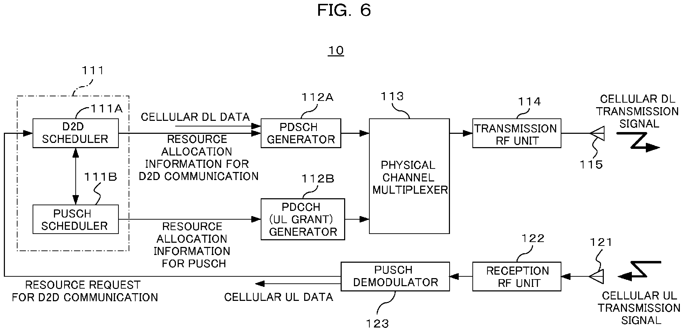

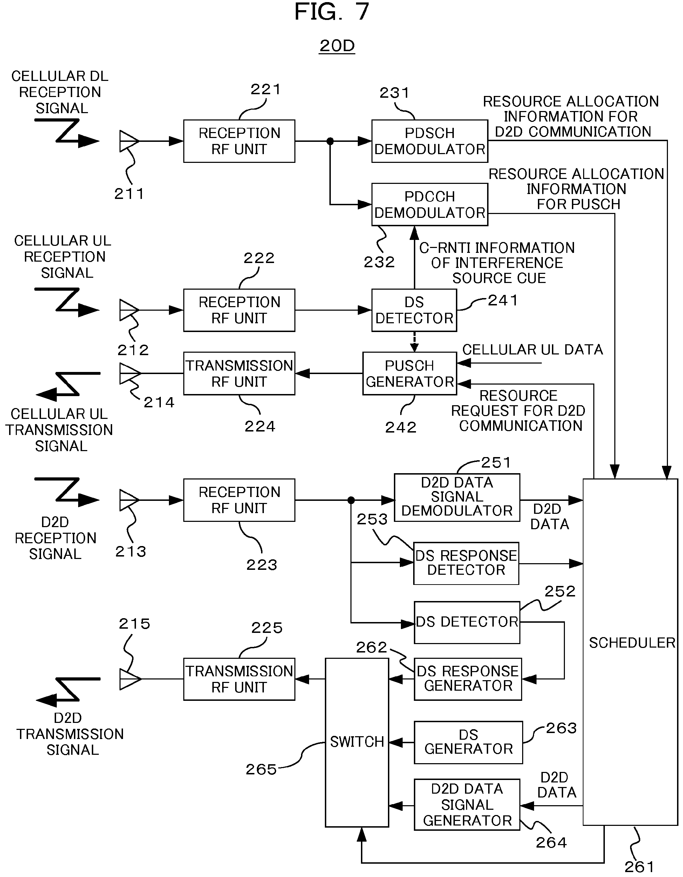

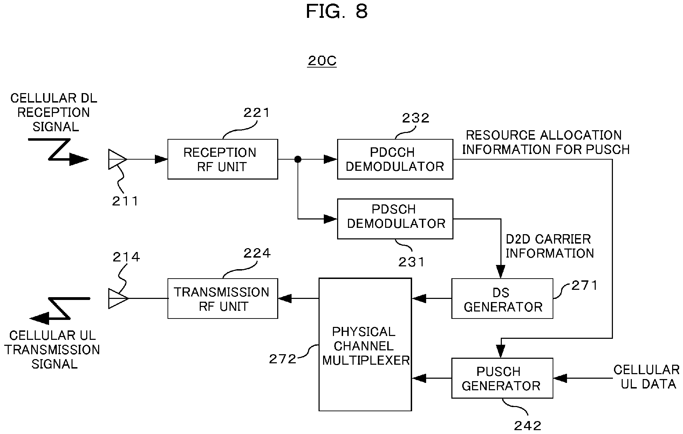

Next, exemplary configurations of the wireless base station 10, the DUE 20, and the CUE 20 for implementing the first interference prevention method will be described with reference to Figs. 6 to 8. Fig. 6 is a block diagram illustrating an exemplary configuration of the wireless base station 10, Fig. 7 is a block diagram illustrating an exemplary configuration of the DUE 20, and Fig. 8 is a block diagram illustrating an exemplary configuration of the CUE 20. Hereinafter, the DUE 20 is also referred to as a "DUE 20D" for the sake of convenience, and the CUE 20 is also referred to as a "CUE 20C" for the sake of convenience.

### (Exemplary configuration of wireless base station 10)

The wireless base station 10 includes, for example, a scheduler 111, a PDSCH generator 112A, a PDCCH (UL grant) generator 112B, a physical channel multiplexer 113, a transmission radio frequency (RF) unit 114, and a transmission antenna 115 as illustrated in Fig. 6.

The scheduler 111 may be considered as being an example of a controller that controls an operation of the wireless base station 10 in general or an example of a functional unit included in the controller. The PDSCH generator 112A, the UL grant generator 112B, the physical channel multiplexer 113, the transmission RF unit 114, and the transmission antenna 115 may be considered as being an example of a DL transmission system (a transmitter or a transmitting device) of the wireless base station 10.

The wireless base station 10 includes a reception antenna 121, a reception RF unit 122, and a PUSCH demodulator 123 as an example of a UL reception system (a receiver or a reception device) as illustrated in Fig. 6.

The scheduler 111 supports, for example, generation of allocation information of the radio resources for the D2D communication and allocation information of the radio resources for the PUSCH. The "allocation information of the radio resources" is also referred to simply as "resource allocation information."

To this end, the scheduler 111 includes, for example, a D2D scheduler 111A and a PUSCH scheduler 111B.

The D2D scheduler 111A internally sets, for example, the radio resources that are allowed to be used for the D2D communication. Upon receiving an allocation request for the radio resources for the D2D communication from any one UE 20, the D2D scheduler 111A generates the allocation information of the radio resources for the D2D communication.

For example, upon receiving a PUSCH transmission permission request from any one UE 20, the PUSCH scheduler 111B generates the allocation information of the radio resources for the PUSCH.

The PDSCH generator 112A generates a signal (a PDSCH signal) that is DL-transmitted through the PDSCH. The PDSCH signal is generated, for example, based on a DL data signal addressed to the CUE 20 which is received from the core network. The data signal is also referred to as "user data" or a "user (U) plane signal."

The PDCCH generator 112B generates the PDCCH signal addressed to the CUE 20. The PDCCH signal may include the DCI (the UL grant) as illustrated in Fig. 3.

The physical channel multiplexer 113 multiplexes the PDSCH signal and the PDCCH signal generated by the PDSCH generator 112A and the PDCCH generator 112B, and outputs a resulting signal to the transmission RF unit 114.

The transmission RF unit 114 converts (for examples, up-converts) the transmission signal of the physical channel multiplexed by the physical channel multiplexer 113 into a RF signal (a radio wave), and outputs the RF signal to the transmission antenna 115 according to specified transmission power.

The transmission antenna 115 radiates the RF signal output from the transmission RF unit 114 into space.

The reception antenna 121 receives a radio wave (that is, a UL RF signal) radiated into space by any one UE 20 and outputs the radio wave to the reception RF unit 122.

The reception RF unit 122 converts (for example, down-converts) the UL RF signal received by the reception antenna 121 into, for example, a baseband frequency signal (hereinafter, also referred to as a "BB signal"), and outputs the BB signal to the PUSCH demodulator 123.

The PUSCH demodulator 123 performs a demodulation process on the BB signal output from the reception RF unit 122, and obtains, for example, the PUSCH signal. The PUSCH signal may include, for example, user data to be transmitted to the core network. The PUSCH signal may include a resource allocation request for the D2D communication. The demodulated resource allocation request is transferred to, for example, the D2D scheduler 111A.

The transmission antenna 115 and the reception antenna 121 may be configured as a transceiving antenna shared by the DL and the UL, for example, using an antenna duplexer. In this case, the transmission RF unit 114 and the reception RF unit 122 may be shared (or integrated) in a single RF transceiver.

All or some of the respective units 111, 112A, 112B, 113, 114, 122, and 123 may be implemented by an operation device with an operation capability such as a CPU, an MPU, or an FPGA. The operation device is also referred to as a "hardware processor" or a "processor device."

### (Exemplary configuration of DUE 20D)

The DUE 20D illustrated in Fig. 7 supports the cellular communication and the D2D communication and corresponds, for example, the DUE 20-1 or 20-2 of Fig. 5. The DUE 20D includes reception antennas 211 to 213, transmission antennas 214 and 215, reception RF units 221 to 223, and transmission RF units 224 and 225 as illustrated in Fig. 7.

The DUE 20D of Fig. 7 includes, for example, a PDSCH demodulator 231, a PDCCH demodulator 232, a DS detector 241, and a PUSCH generator 242. The DUE 20D of Fig. 7 further includes, for example, a D2D data signal demodulator 251, a DS detector 252, a DS response detector 253, a scheduler 261, a DS response generator 262, a DS generator 263, a D2D data signal generator 264, and a switch 265.

The reception antenna 211 receives the DL RF signal in the cellular communication, and outputs the DL RF signal to the reception RF unit 221.

The reception RF unit 221 down-converts the DL RF signal received by the reception antenna 211 into, for example, the BB signal, and outputs the BB signal to the PDSCH demodulator 231 and the PDCCH demodulator 232.

The PDSCH demodulator 231 demodulates the PDSCH signal by performing the demodulation process on the BB signal output from the reception RF unit 221. When the demodulated PDSCH signal indicates the resource allocation information for the D2D communication, the resource allocation information is transferred to the scheduler 261. Further, when the resource allocation information for the D2D communication is the allocation information of the frequency resources, the allocation information is also referred to as "D2D carrier information."

The PDCCH demodulator 232 demodulates the PDCCH signal by performing the demodulation process on the BB signal output from the reception RF unit 221. The demodulation process includes a decoding process such as error correction decoding. When the demodulated PDCCH signal indicates the resource allocation information for the PUSCH in the cellular communication, the resource allocation information is transferred to the scheduler 261.

The PDCCH demodulator 232 tries to demodulate and decode the UL grant included in the PDCCH signal addressed to another CUE 20 based on the C-RNTI included in the "message" of the reception DS detected by the DS detector 241 as described above.

Thus, the PDCCH demodulator 232 may be considered as being an example of a decoder that decodes the allocation information of the radio resources that is encoded by the wireless base station 10 using the C-RNTI and then transmitted to the CUE 20 using the C-RNTI detected by the DS detector 241.

The reception antenna 212 receives the UL RF signal in the cellular communication and outputs the UL RF signal to the reception RF unit 222.

The reception RF unit 222 down-converts the UL RF signal received by the reception antenna 221 into, for example, the BB signal, and outputs the BB signal to the DS detector 241.

The DS detector 241 detects the DS from the BB signal input from the reception RF unit 222. Upon detecting the DS, the C-RNTI included in the "message" of the DS is transferred to the PDCCH demodulator 232 as information indicating the CUE 20 serving as the interference source of the D2D communication.

The reception RF unit 222 and the DS detector 241 may be considered as being an example of a receiver that receives the identification information of the CUE 20 transmitted from the CUE 20 that performs wireless communication with the wireless base station 10 using the radio resources allocated for the D2D communication.

The reception antenna 213 receives the RF signal transmitted from another DUE 20D in the D2D communication, and outputs the RF signal to the reception RF unit 223.

The reception RF unit 223 down-converts the reception RF signal of the D2D communication received by the reception antenna 213 into, for example, the BB signal, and outputs the BB signal to the D2D data signal demodulator 251, the DS detector 252, and the DS response detector 253.

The D2D data signal demodulator 251 demodulates the BB signal input from the reception RF unit 223, and obtains a data signal of the D2D communication. When the D2D communication is performed using the PUSCH as described above, the D2D data signal demodulator 251 may be the PUSCH demodulator 251 that demodulates the PUSCH signal.

The DS detector 252 detects the DS from the BB signal input from the reception RF unit 223. For example, the DS corresponds to the DS that is generated by the DS generator 263 in another DUE 20D and transmitted in order to search for the DUE 20D establishing a pair of the D2D communication. In response to the detection of the DS by the DS detector 252, the DS response generator 262 generates a DS response signal.

The DS response detector 253 detects the DS response signal to the DS that is generated by the DS generator 263 and transmitted to another DUE 20 from the signal received by the reception RF unit 223. A notification indicating that the DS response signal is detected is given to, for example, the scheduler 261. In response to the detection of the DS response signal, a pair of the D2D communication with another DUE 20 is established.

The scheduler 261 is an example of a controller that controls the cellular communication and the D2D communication. For example, the scheduler 261 transmits the resource allocation request for the D2D communication to the PUSCH generator 242. The PUSCH generator 242 generates the PUSCH signal addressed to the wireless base station 10 including the resource allocation request in response to the reception of the resource allocation request.

Further, when the PDSCH demodulator 231 demodulates the resource allocation information serving as the response to the resource allocation request for the D2D communication, the scheduler 261 receives the resource allocation information from the PDSCH demodulator 231. The scheduler 261 controls the D2D data signal demodulator 251 and the D2D data signal generator 264 such that the D2D communication is performed using the frequency resources indicated by the resource allocation information.

Further, when the PDCCH demodulator 232 successfully demodulates and decodes the PDCCH signal (the UL grant) addressed to another CUE 20 serving as the interference source of the D2D communication, the scheduler 261 receives the resource allocation information of the interference source CUE 20 indicated by the UL grant. The scheduler 261 controls the D2D data signal demodulator 251 and the D2D data signal generator 264 such that the D2D communication using the frequency resources indicated by the resource allocation information of the interference source CUE 20 is inhibited.

The PUSCH generator 242 generates the PUSCH signal including the UL data signal in the cellular communication, and outputs the PUSCH signal to the transmission RF unit 224. The resource allocation request for the D2D communication received from the scheduler 261 may be transmitted through the PUSCH signal.

The transmission RF unit 224 converts (up-converts) the PUSCH signal of the baseband frequency generated by the PUSCH generator 242 into the RF signal, and outputs the RF signal to the transmission antenna 214.

The transmission antenna 214 radiates the RF signal output from the transmission RF unit 224 into space.

The DS generator 263 generates the DS for searching for another DUE 20D establishing a pair of the D2D communication. The DS is detected by the DS detector 252 of another DUE 20D.

The D2D data signal generator 264 generates, for example, a transmission data signal of the D2D communication including the data signal received from the scheduler 261. When the D2D communication is performed using the PUSCH as described above, the D2D data signal generator 251 may be the PUSCH generator 251 that generates the PUSCH signal.

The switch 265 selectively output the outputs of the DS response generator 262, the DS generator 263 and the D2D data signal generator 264 to the transmission RF unit 225, for example, according to control by the scheduler 261. The D2D communication (transmission) is controlled by switching and controlling the switch 265 through the scheduler 261.

The transmission RF unit 225 converts (up-converts) the BB signal serving as the output signal of the switch 265 into the RF signal and outputs the RF signal to the transmission antenna 215.

The transmission antenna 215 radiates the RF signal output from the transmission RF unit 225 into space.

Either or both of the DL reception antenna 211 and the UL reception antenna 212 for the cellular communication and the reception antenna 213 for the D2D communication may be integrated into a single reception antenna. Similarly, either or both of the DL reception RF unit 221 and the UL reception RF unit 222 for the cellular communication and the reception RF unit 223 for the D2D communication may be integrated into a single RF receiver.

The UL transmission antenna 214 for the cellular communication and the transmission antenna 215 for the D2D communication may be integrated into a single transmission antenna. Similarly, the UL transmission RF unit 224 for the cellular communication and the transmission RF unit 225 for the D2D communication may be integrated into a single RF transmitter.

Some or all of the reception antennas 211 to 213 and the transmission antennas 214 and 215 may be integrated into a single transceiver antenna. Similarly, some or all of the reception RF units 221 to 223 and the transmission RF units 224 and 225 may be integrated into a single RF transceiver.

All or some of the respective units 221 to 225, 231, 232, 241, 242, 251 to 253, and 261 to 265 are also referred to as a hardware processor with an operation capability such as a CPU, an MPU, or an FPGA.

### (Exemplary configuration of CUE 20C)

Fig. 8 is a block diagram illustrating an exemplary configuration of the CUE 20C that supports the cellular communication. The CUE 20C illustrated in Fig. 8 corresponds, for example, the CUE 20-3 of Fig. 5 and is a UE capable of transmitting (also referred to as "giving a notification of") the C-RNTI of its own UE 20-3 through the DS.

The CUE 20C illustrated in Fig. 8 includes, for example, a reception antenna 211, a reception RF unit 221, a PDCCH demodulator 232, and a PDSCH demodulator 231 which are similar to those illustrated in Fig. 7. The CUE 20C illustrated in Fig. 8 further includes, for example, a transmission antenna 214, a transmission RF unit 224, and a PUSCH generator 242 which are similar to those illustrated in Fig. 7. The CUE 20C illustrated in Fig. 8 further includes a DS generator 271 and a physical channel multiplexer 272.

When the PDSCH signal demodulated by the PDSCH demodulator 231 indicates the D2D carrier information, the DS generator 271 receives the D2D carrier information from the PDSCH demodulator 231. In response to the reception of the D2D carrier information, the DS generator 271 may generate the DS in which the C-RNTI of its own UE 20 is included in the "message" which is transmitted through the frequency resources (carrier) for the D2D communication indicated by the D2D carrier information.

The physical channel multiplexer 272 multiplexes the DS generated by the DS generator 271 and the PUSCH signal generated by the PUSCH generator 242, and outputs a resulting signal to the transmission RF unit 224.

The transmission RF unit 224 converts (up-converts) the BB signal into the RF signal, and outputs the RF signal to the transmission antenna 214.

The DS generator 271, the physical channel multiplexer 272, and the transmission RF unit 224 may be considered as being an example of a transmitter that transmits the DS in which the C-RNTI serving as the identification information of the CUE 20C is included in the "message."

The transmission antenna 214 radiates the RF signal output from the transmission RF unit 224 into space.

The reception antenna 211 and the transmission antenna 214 may be integrated into a single transceiver antenna. Similarly, the reception RF unit 221 and the transmission RF unit 224 may be integrated into a single RF transceiver. All or some of the respective units 221, 224, 231, 232, 242, 271, and 272 may be implemented by a hardware processor with an operation capability such as a CPU, an MPU, or an FPGA.

### (Exemplary operation)

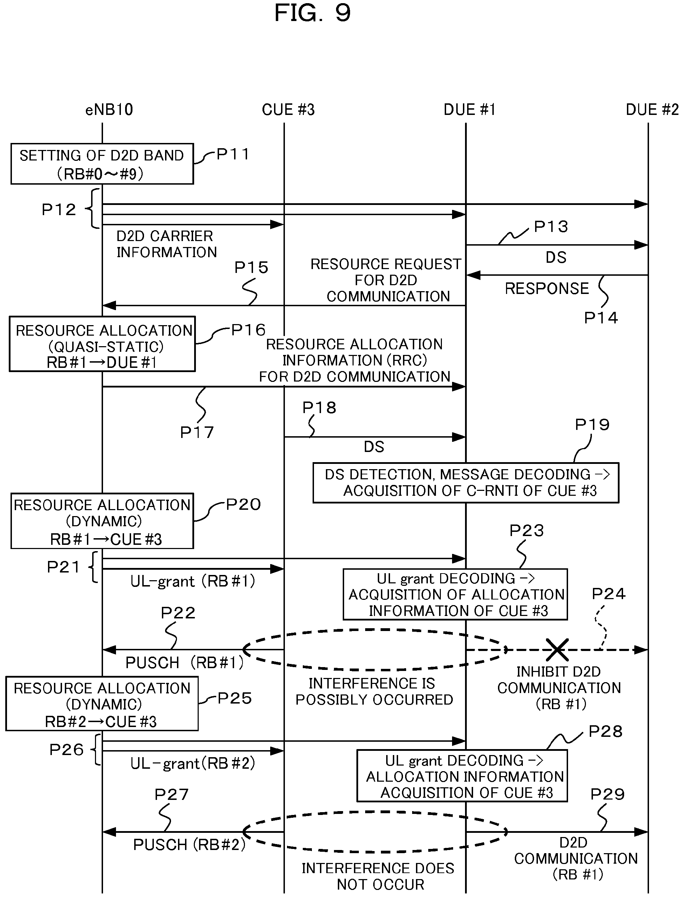

Next, an example of a method of preventing interference between cellular communication and the D2D communication in the wireless communication system 1 having the above-described configuration will be described with reference to a sequence diagram illustrated in Fig. 9.

The wireless base station 10 performs a setting of the frequency resources for the D2D communication in advance (process P11). The setting may be performed by the scheduler 111 (the D2D scheduler 111A) illustrated in Fig. 6.

Fig. 9 illustrates an example in which 10 RBs #0 to #9 are set as the frequency resources available for the D2D communication as a non-limiting example. The frequency resources for the D2D communication are also referred to simply as "D2D resources."

When the setting of the D2D resources is completed, the wireless base station 10 transmits the resource allocation information (the D2D carrier information) for the D2D communication, for example, through the PDSCH (process P12). The PDSCH signal is generated by, for example, the PDSCH generator 112A illustrated in Fig. 6 and transmitted through the physical channel multiplexer 113, the transmission RF unit 114, and the transmission antenna 115.

The PDSCH signal is received by the UE 20 located within the cell 100 of the wireless base station 10. In the example of Fig. 9, a DUE #1, a DUE #2, and the CUE #3 receive the PDSCH signal. The received PDSCH signal is demodulated by, for example, the PDSCH demodulator 231 illustrated in Figs. 7 and 8.

Here, for example, the DUE #1 is assumed to generate the DS through the DS generator 263 (see Fig. 7) and transmit the DS in order to search for the DUE 20 establishing a pair of the D2D communication (process P13). In the example of Fig. 9, the DS is received by the DUE #2.

Upon detecting the DS through the DS detector 252 (see Fig. 7), the DUE #2 generates the DS response signal through the DS response generator 262, and transmits the DS response signal to the DUE #1 (process P14). Upon detecting the reception of the DS response signal through the DS response detector 253, the DUE #1 establishes a pair of the D2D communication with the transmission source DUE #2 of the DS response signal.

When a pair of the D2D communication is established, the DUE #1 transmits a D2D resource allocation request with the DUE #2 to the wireless base station 10 (process P15). For example, the D2D resource allocation request is transmitted from the transmission antenna 214 using the PUSCH through the scheduler 261 and the PUSCH generator 242 illustrated in Fig. 7.

The wireless base station 10 receives and demodulates the D2D resource allocation request transmitted from the DUE #1 through the PUSCH demodulator 123 and transfers the demodulated D2D resource allocation request to the D2D scheduler 111A. The D2D scheduler 111A determines to allocate any one (for example, the RB #1) of the RBs #0 to #9 set as the D2D communication resources to the DUE #1 in response to the reception of the D2D resource allocation request (process P16).

The allocation of the D2D resources may be dynamic or may be "quasi-static" in order to suppress a communication amount between the wireless base station 10 and the DUE 20 as much as possible. "quasi-static" may be non-static (unfixed) but may be considered as indicating that a change is not made as often as "dynamic."

As the allocation of the RB #1 is determined, the wireless base station 10 transmits the resource allocation information of the RB #1 to, for example, the DUE #1 through the PDSCH (process P17). The PDSCH signal including the resource allocation information is generated by, for example, the PDSCH generator 112A illustrated in Fig. 6. The transmission of the resource allocation information by the PDSCH signal may be considered as being an example of radio resource control (RRC).

Meanwhile, when the D2D carrier information received from the wireless base station 10 indicates that the D2D communication is set in the frequency resources for the UL cellular communication, the CUE #3 that performs the cellular communication with the wireless base station 10 transmits the DS (process P18). The transmission of the DS may be periodically performed. However, the DS may be non-periodically performed. The DS may be generated by, for example, the DS generator 271 illustrated in Fig. 8, and the C-RNTI of the CUE #3 may be included in the "message" (see Fig. 5).

The DS transmitted from the CUE #3 is received by any one of the UEs 20 located around the CUE #3. In the example of Fig. 9, the DUE #1 receives the DS transmitted from the CUE #3.

Upon detecting the reception of the DS through the DS detector 241 (see Fig. 7), the DUE #1 decodes the "message" of the received DS, and acquires (detects) the C-RNTI included in the "message" (process P19). The DUE #1 recognizes that the CUE #3 identified by the detected C-RNTI may function as the interference source of the D2D communication with the DUE #2. The detected C-RNTI is transferred to the PDCCH demodulator 232 (see Fig. 7) and then used for demodulation of the PDCCH signal in the DL cellular communication of the CUE #3.

Meanwhile, upon receiving a transmission request for the transmission permission information (the UL grant) from the CUE #3, the wireless base station 10 determines to allocate the frequency resources that are allowed to be used for the UL transmission by the CUE #3 through the PUSCH scheduler 111B (see Fig. 6) (process P20). In the example of Fig. 9, the RB #1 is allocated to the CUE #3.

When the RB #1 is determined as the frequency resources to be allocated to the CUE #3, the wireless base station 10 generates the UL grant including the resource allocation information indicating the RB #1 through the UL grant generator 112B (see Fig. 6) and transmits the UL grant to the CUE #3 through, for example, the PDCCH (process P21).

When the UL grant is successfully received, demodulated, and decoded through the PDCCH demodulator 232 (see Fig. 8), after 4ms as illustrated in Fig. 4, the CUE #3 performs the UL transmission (transmission of the PUSCH signal) using the RB #1 indicated by the UL grant (process P22).

Here, the PDCCH signal including the UL grant addressed to the CUE #3 is also received by the DUE #1 located within the cell 100 of the wireless base station 10 (see Fig. 1). The DUE #1 tries to decode the PDCCH signal addressed to the CUE #3 through the PDCCH demodulator 232 (see Fig. 7) using the C-RNTI of the CUE #3 detected in process P19. When the decoding is successfully performed, the DUE #1 can acquire the allocation information of the frequency resources of the RB #1 allocated from the wireless base station 10 to the CUE #3 for the UL cellular communication (process P23).

Thus, when the transmission of the D2D communication to the DUE #2 is performed using the RB #1 allocated from the wireless base station 10 to the CUE #3, the DUE #1 recognizes that there is a possibility that interference will occur and does not transmit the D2D communication using the RB #1 (process P24). Alternatively, the DUE #1 may performs the transmission to the DUE #2 using other frequency resources not overlapping with the RB #1.

For example, control of transmission data of the D2D communication by the scheduler 261 (see Fig. 7) may be performed by performing scheduling of D2D data to be transferred to the D2D data signal generator 264 to avoid the frequency resources (RB) overlapping with the RB #1.

In other words, when the RB (the D2D resources) is different from the frequency resources indicated by the UL grant addressed to the CUE #3, the DUE #1 may perform the transmission to the DUE #2 using the D2D resources.

For example, as illustrated in processes P25 to P29 in Fig. 9, when the UL grant addressed to the CUE #3 indicates the RB #2, the DUE #1 may perform the transmission to the DUE #2 using the RB #1 since there is no interference with the cellular communication when the RB #1 is used.

The DUE #2 establishing a pair of the D2D communication with the DUE #1 can also perform the transmission of the D2D communication by avoiding the use of the RB #1 used for the cellular communication by the CUE #3, similarly to the process in the DUE #1. The same applies to the DUE 20 establishing a pair of other D2D communication.

Accordingly, the interference between the cellular communication and the D2D can be prevented. Thus, the DUE 20 (for example, the DUE #2) at the reception side of the D2D communication can receive a data signal of a sufficient quality from the DUE 20 (for example, the DUE #1) at the transmission side through the D2D communication regardless whether or not the interference component of the cellular communication is included.

Further, since the DUE 20 at the transmission side of the D2D communication does not perform transmission using the frequency resources that are unlikely to be properly received by the DUE 20 at the reception side although it performs the data transmission, it is possible to prevent interference with surrounding communication caused by unnecessary data transmission. In other words, the DUE 20 at the transmission side can be prevented from functioning as the interference source of other communication. For example, "other communication" is the cellular communication or another D2D communication of the CUE 20 located near the DUE 20 at the transmission side.

### (Second embodiment)

The first embodiment has been described in connection with the example in which the DUE #1 that successfully demodulates and decodes the UL grant addressed to the CUE #3 and detects the C-RNTI of the CUE #3 autonomously controls (schedules) the frequency resources used for the transmission of the D2D communication.

A second embodiment will be described in connection with an example in which the DUE #1 that has detected the C-RNTI of the CUE #3 gives a notification of the C-RNTI to the wireless base station 10 and causes the wireless base station 10 to perform scheduling of the frequency resources so that the cellular communication does not interfere with the D2D communication.

This interference prevention method corresponds to a "second interference prevention method," compared to the "first interference prevention method" of the first embodiment. In the second embodiment, the wireless base station 10, the DUE 20D, and the CUE 20C may have similar exemplary configurations to those illustrated in Figs. 6 to 8.

### (Second interference prevention method)

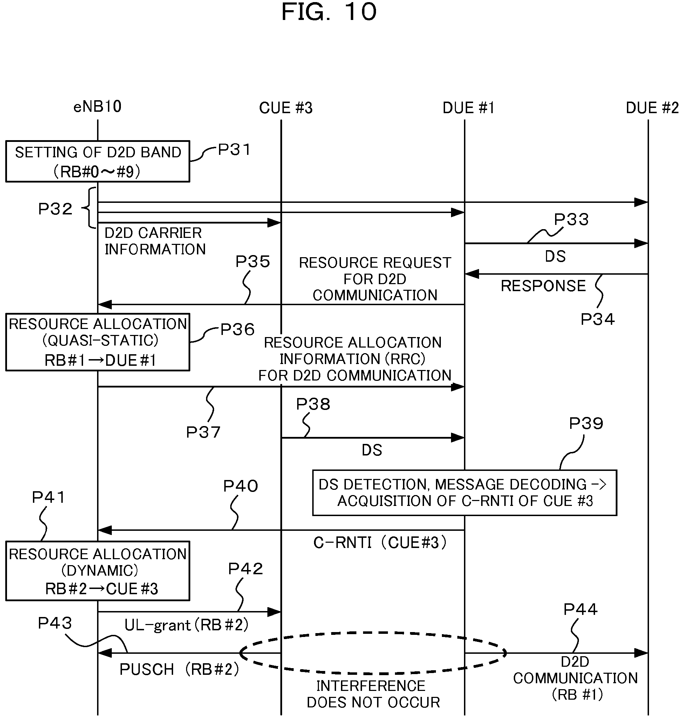

Fig. 10 is a sequence diagram illustrating an operation of the wireless communication system according to the second embodiment (the second interference prevention method). In Fig. 10, processes P31 to P39 are the same as or similar to processes P11 to P19 illustrated in Fig. 9.

In other words, a process until the DUE #1 successfully receives the DS and decodes the "message" of the DS transmitted from the CUE #3 and detects the C-RNTI of the CUE #3 after the wireless base station 10 sets the frequency resources for the D2D communication (the RBs #0 to #9) is the same as in the first interference prevention method.

The DUE #1 that has detected the C-RNTI of the CUE #3 gives a notification of the C-RNTI (also referred to as "reports the C-RNTI") to the wireless base station 10 (process P40). This notification may be given through, for example, the PUSCH. The PUSCH signal including the C-RNTI of the CUE #3 may be generated by the PUSCH generator 242 illustrated in Fig. 7.

For example, the PUSCH generator 242 may receive the C-RNTI of the interference source CUE #3 detected by the DS detector 241 (see a dotted line arrow of Fig. 7) and generate the PUSCH signal including the C-RNTI. Thus, the PUSCH generator 242 and the transmission RF unit 224 illustrated in Fig. 7 may be considered as being an example of a transmitter that transmits the identification information of the interference source CUE 20 to the wireless base station 10.

Here, the notification of the C-RNTI to the wireless base station 10 may be performed using a different UL physical channel from the PUSCH. This notification may be given using information that enables the wireless base station 10 to identify the CUE #3 instead of the C-RNTI.

In other words, the information reported to the wireless base station 10 may be information that enables the wireless base station 10 to identify the CUE #3 that may function as the interference source of the D2D communication. Thus, instead of the C-RNTI, unique device identification information permanently allocated to the CUE #3 may be used. However, using the C-RNTI that is the temporary information, security of communication is easily secured.

When the PUSCH signal including the C-RNTI of the CUE #3 whose transmission source is the DUE #1 is received and demodulated by the PUSCH demodulator 123 (see Fig. 6), the wireless base station 10 transfers the C-RNTI of the CUE #3 to the scheduler 111 (for example, the PUSCH scheduler 111B).

The scheduler 111B identifies the CUE #3 that may function as the interference source on the DUE #1 of the report source based on the C-RNTI, and allocates the frequency resources not overlapping the D2D resources allocated to the DUE #1 to the CUE #3 (process P41).

In the example of Fig. 10, in processes P36 and P37, the D2D resources of the RB #1 are allocated to the DUE #1, and thus for example, the RB #2 not overlapping with the RB #1 is allocated to the CUE #3.

Thus, the scheduler 111 may be considered as being an example of a controller that performs control such that resources not overlapping the D2D resources are used as the radio resources used for the cellular communication with the wireless base station 10 by the CUE #3 identified by the C-RNTI received from the DUE #1.

When the RB #2 is determined to be allocated to the CUE #3, the wireless base station 10 generates the UL grant including the resource allocation information indicating the RB #2 through the UL grant generator 112B and transmits the generated UL grant through the PDCCH (process P42).

When the PDCCH demodulator 232 (see Fig. 8) receives the UL grant from the wireless base station 10 and demodulates the UL grant, the CUE #3 recognizes that the RB #2 is allocated to the transmission of the PUSCH and thus perform the transmission of the PUSCH using the RB #2 (process P43).

On the other hand, since the RB #2 not overlapping with the RB #1 used for the transmission of the D2D communication to the DUE #2 is allocated to the PUSCH of the CUE #3, no interference occur even when the DUE #1 performs the transmission of the D2D communication using the RB #1 (process P44).

Accordingly, the interference between the cellular communication and the D2D can be prevented. Thus, the DUE 20 (for example, the DUE #2) at the reception side of the D2D communication can receive a data signal of a sufficient quality from the DUE 20 (for example, the DUE #1) at the transmission side through the D2D communication regardless whether or not the interference component of the cellular communication is included.

The DUE #2 establishing a pair of the D2D communication with the DUE #1 may detect the C-RNTI of the CUE #3 that may function as the interference source and report the C-RNTI of the CUE #3 to the wireless base station 10, similarly to the process in the DUE #1. The same applies to the DUE 20 establishing a pair of other D2D communication.

### (Third embodiment)

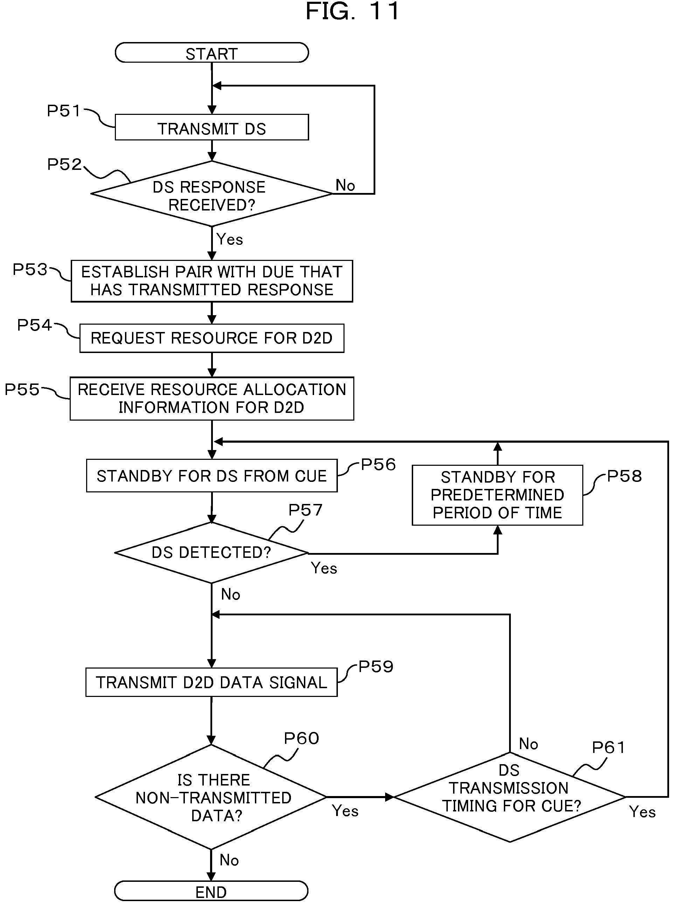

Next, a third embodiment (a third interference prevention method) will be described with reference to a flowchart illustrated in Fig. 11. In the third embodiment, when the DUE 20 receives and detects the DS transmitted from the CUE 20, the DUE 20 temporarily stops the D2D communication regardless of communication to which frequency resource are allocated by the wireless base station 10 and the allocated frequency resources. In the third embodiment, the wireless base station 10, the DUE 20D, and the CUE 20C may have similar exemplary configurations to those illustrated in Figs. 6 to 8.

As illustrated in Fig. 11, the DUE 20 (for example, the DUE #1 illustrated in Figs. 1 and 5) generates the DS for searching for another DUE 20 establishing a pair of the D2D communication through the DS generator 263 (see Fig. 7) and transmits the DS (process P51).

The DUE #1 periodically repeats the transmission of the DS until the DS response signal is received (until Yes is determined in process P52) (a route of No in process P52). When the reception of the DS response signal is detected by the DS response detector 253 (when Yes is determined in process P52), the DUE #1 establishes a pair of the D2D communication with the DUE 20 (for example, the DUE #2 illustrated in Figs. 1 and 5) serving as the transmission source of the DS response signal (process P53).

When a pair of the D2D communication is established, the DUE #1 transmits the D2D resource allocation request to the wireless base station 10, for example, through the PUSCH (process P54). The PUSCH signal is generated by, for example, the PUSCH generator 242 illustrated in Fig. 7.

The DUE #1 receives the allocation information of the D2D resources from the wireless base station 10 through, for example, the PDSCH (process P55). Thereafter, the DUE #1 monitors whether or not the DS transmitted from the CUE 20 (for example, the CUE #3 of Fig. 5) is received (process P56 and P57).

Upon the reception of the DS transmitted from the CUE #3 through, for example, the DS detector 252 (see Fig. 7) (Yes in process P57), the DUE #1 is on standby for the transmission of the D2D communication for a predetermined period of time (process P58), and continuously monitors whether or not the DS transmitted from the CUE 20 is received. The "predetermined period of time" may be, for example, a period of time of the order of milliseconds.

The standby period of time after the detection of the reception of the DS need not be necessarily a predetermined period of time and may be variable. For example, the standby period of time may vary according to a moving speed of the DUE #1 that has detected the reception of the DS. As a non-limiting example, as the moving speed of the DUE #1 decreases, the standby period of time may increase since a change in an environment in which interference is likely to occur is considered to be small.

When the reception of the DS transmitted from the CUE 20 is not detected (No in process P57), the DUE #1 transmits D2D data signal using the frequency resources indicated by the allocation information of the D2D resources received in process P55 (process P59).

When there is no non-transmitted D2D data signal addressed to the DUE #2 (No in process P60), the DUE #1 ends the process. On the other hand, when there is a non-transmitted D2D data signal addressed to the DUE #2 (Yes in process P60), the DUE #1 checks whether or not a current timing corresponds to the DS transmission timing by the CUE 20 (process P61).

The DUE #1 may store information indicating a timing (for example, a cycle) at which the CUE 20 transmits the DS (hereinafter, also referred to as "CUE-DS transmission timing information"). The CUE-DS transmission timing information may be set and stored in the DUE 20 as information known between the CUEs 20 or may be reported from the CUE 20 (or the wireless base station 10).

When the current timing does not correspond to the DS transmission timing by the CUE 20 as a result of checking in process P61 (No in process P61), the DUE #1 continuously transmit the D2D data signal until there is no D2D data signal addressed to the DUE #2.

On the other hand, when the current timing corresponds to the DS transmission timing by the CUE 20 (Yes in process P61), the DUE #1 returns to process P56, and monitors whether or not the DS is received from the CUE 20.

The DUE #2 establishing a pair of the D2D communication with the DUE #1 may also perform the same processes P51 to P61 as those described above.

As described above, when the DUE 20 receives and detects the DS transmitted from the CUE 20, the DUE 20 temporarily stops the D2D communication regardless of communication to which frequency resources are allocated by the wireless base station 10 and the frequency resources, and thus the interference between the cellular communication and the D2D communication can be prevented.

Thus, the DUE 20 at the reception side of the D2D communication (for example, the DUE #2) can receive the data signal of a sufficient quality when the DUE 20 at the transmission side (for example, the DUE #1) transmits the D2D data signal.

Further, since the DUE 20 at the transmission side of the D2D communication does not perform transmission at a timing that are unlikely to be properly received by the DUE 20 at the reception side although it performs the data transmission, it is possible to prevent interference with surrounding cellular communication or another D2D communication caused by unnecessary data transmission.

In the above-described example, the DUE #1 that has detected the DS transmitted from the CUE #3 is on standby for a predetermined period of time and then monitors whether or not the DS is received from the CUE #3 (or another CUE 20) again. However, when the DS transmitted from the CUE 20 is detected, the DUE 20 may be on standby for a predetermined period of time and then try to perform the transmission of the D2D communication without monitoring the reception of the DS. It is because there are cases in which no interference occurs even when the transmission of the D2D communication is performed according to the laps of time after the DS is detected.

### (Fourth embodiment)

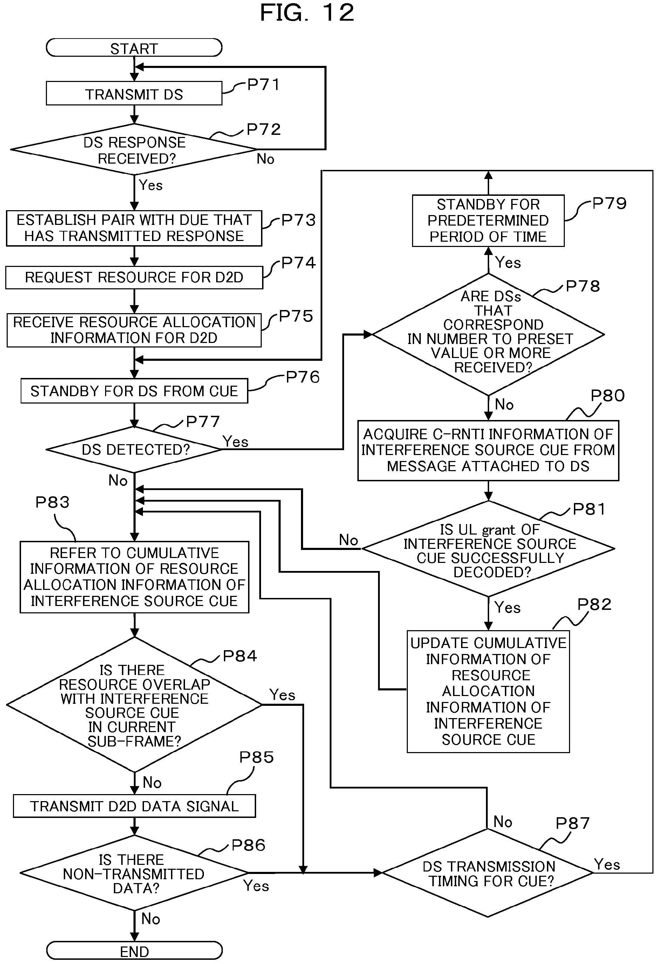

Next, an interference prevention method according to a fourth embodiment will be described with reference to Fig. 12.

In the third embodiment, the DUE 20 temporarily stops the D2D communication according to the detection of the reception of the DS transmitted from the CUE 20, but in the fourth embodiment, the D2D communication may be temporarily stopped after the number of DSs that are received and detected reaches a default value (for example, an integer of 2 or larger).

Further, until the number of DSs that are received and detected reaches a default value, the DUE 20 try to decode the UL grant addressed to the CUE 20 and perform the D2D communication so as to avoid the frequency resources allocated to the CUE 20, similarly to the first embodiment.

In the fourth embodiment, the wireless base station 10, the DUE 20D, and the CUE 20C may have similar exemplary configurations to those illustrated in Figs. 6 to 8.

As illustrated in Fig. 12, similarly to the third embodiment, the DUE 20 (for example, the DUE #1) establishes a pair of the D2D communication with another DUE 20 (for example, the DUE #2) and then monitors whether or not the DS transmitted from the CUE 20 is received and detected (process P71 to P77).

When the DS is received and detected, the DUE #1 checks whether or not the number of DSs that are detected to be received for a predetermined period of time (hereinafter, referred to as "the number of received DSs") is a default value or more (a route of Yes in process P77 and process P78). For example, the "predetermined period of time" may be set to a predetermined of time shorter than a transmission cycle of the DS by the CUE 20. The default value (that is, a threshold value) for the number of received DSs may be stored in a memory (not illustrated) with which the DUE #1 is equipped. The memory may be installed in, for example, the scheduler 261 illustrated in Fig. 7.

When the number of received DSs is the default value or more (Yes in process P78), the DUE #1 is on standby for the D2D communication with the DUE #2 for a predetermined period of time (process P79), and monitors whether or not the DS is received from the CUE 20 and detected.

On the other hand, when the number of received DSs is less than the default value (No in process P78), the DUE #1 detects and acquires the C-RNTI of the CUE 20 (for example, the CUE #3) that may function as the interference source of the D2D communication from the "message" of the received DS (see Fig. 5) (process P80).

Upon detecting the C-RNTI of the CUE #3, the DUE #1 tries to demodulate and decode the UL grant transmitted from the wireless base station 10 through the PDCCH addressed to the CUE #3 using the C-RNTI.

When the UL grant addressed to the CUE #3 is successfully decoded (Yes in process P81), the DUE #1 stores the resource allocation information indicated by the UL grant. The resource allocation information may be stored in the memory. When the resource allocation information is already stored in the memory, the DUE #1 may update the resource allocation information (hereinafter, also referred to as "accumulation information") to resource allocation information indicated by the latest UL grant (process P82).

The DUE #1 checks whether or not the D2D resources allocated from the wireless base station 10 in process P75 overlap with the frequency resources indicated by the UL grant addressed to the CUE #3 (process P84) with reference to the accumulation information of the resource allocation information allocated to the CUE 20 (process P83). For example, the DUE #1 checks whether or not the resource overlapping occurs at the transmission timing of the data signal of the D2D communication (for example, a sub-frame).

When no resource overlapping occurs (No in process P84), the DUE #1 transmits the D2D data signal using the frequency resources indicated by the allocation information of the D2D resources received in process P75, similarly to the third embodiment (process P85).

When there is no non-transmitted D2D data signal addressed to the DUE #2 (No in process P86), the DUE #1 ends the process. On the other hand, when there is a non-transmitted D2D data signal addressed to the DUE #2 (Yes in process P86), the DUE #1 checks whether or not a current timing corresponds to the DS transmission timing by the CUE 20, similarly to the third embodiment (process P87).

When the current timing does not correspond to the DS transmission timing by the CUE 20 as a result of checking in process P87 (No in process P87), the DUE #1 returns to process P83 and performs the resource overlapping check with reference to the accumulation information of the resource allocation information of the CUE 20.

On the other hand, when the current timing corresponds to the DS transmission timing by the CUE 20 (Yes in process P87), the DUE #1 returns to process P76, and monitors whether or not the DS is received from the CUE 20.

When the UL grant addressed to the CUE #3 fails to be decoded in process P81 (No in process P81), the DUE #1 performs processes P83 to P87. For example, the DUE #1 may determine whether or not the D2D communication is performed by performing the resource overlapping check based on the previous accumulation information of the resource allocation information allocated to the CUE 20.

When the resource overlapping occurs as a result of performing the resource overlapping check in process P84 (Yes in process P84), the DUE #1 checks whether or not the current timing corresponds to the DS transmission timing by the CUE 20 (process P87).

When the current timing does not correspond to the DS transmission timing by the CUE 20 as a result of checking (No in process P87), the DUE #1 returns to process P83 and performs the resource overlapping check with reference to the accumulation information of the resource allocation information of the CUE 20.

Further, when the DS is not detected in process P77 (No), the DUE #1 may proceed to a process subsequent to process P83. Further, the DUE #2 establishes a pair of the D2D communication with the DUE #1 may also perform the same processes P71 to P87 as those described above.

As described above, when the number of received DSs from the CUE 20 is the default value or more, the DUE 20 stops the D2D communication, and when the number of received DSs is less than the default value, the DUE 20 can perform the D2D communication while avoiding the use of the frequency resources allocated to the CUE 20, similarly to the first embodiment.

Thus, when the number of received DSs is determined to be the default value or more, and the number of CUEs 20 that may function as the interference source is determined to be large, the DUE 20 does not perform the D2D communication, and thus the interference between the cellular communication and the D2D communication can be prevented. Further, it is possible to prevent interference with surrounding cellular communication or another D2D communication caused by unnecessary data transmission by the DUE 20.

On the other hand, when the number of received DSs is determined to be less than the default value, and the number of CUEs 20 that may function as the interference source is determined to be small, the DUE 20 can perform the D2D communication while avoiding the user of the frequency resources allocated to the CUE 20 and efficiently use the frequency resources. In this case, the DUE 20 at the reception side of the D2D communication (for example, the DUE #2) can receive the data signal of a sufficient quality from the DUE 20 at the transmission side (for example, the DUE #1).

### (Others)

There may be an exception in the transmission of the DS by the CUE 20. When the radio resources for the D2D communication are shared with the radio resources for the cellular communication, it is desirable that the CUE 20 transmit the DS in order to prevent interference as described above.

However, the CUE having no the DS transmission function is unable to transmit the DS and thus unable to transmit its own C-RNTI. It is desirable that the wireless base station 10 allocate the radio resources other than the radio resources for the D2D communication to the CUE having no the DS transmission function.

Even when it is desirable that the CUE 20 having the DS transmission function do not transmit the DS due to a certain reason, it is desirable that the wireless base station 10 allocate the radio resources other than the radio resources for the D2D communication to the CUE 20.

For example, the DS transmitted from the CUE 20 moving at a high speed higher than a certain speed threshold value may not be helpful to detection of an interference state on the D2D communication. Thus, it is desirable that the wireless base station 10 allocate the radio resources other than the radio resources for the D2D communication to the CUE 20 moving at a high speed.

In other words, the wireless base station 10 may control whether or not the transmission of the DS from the CUE 20 is allowed according to the moving speed of the CUE 20. For example, the CUE 20 moving at a high speed higher than a certain speed threshold value is requested to stop the transmission of the DS, and thus it is possible to save the radio resources used for the DS transmission and reduce the power consumption of the CUE 20.

As described above, according to the above embodiments, the radio resources (for example, the frequency resources) can be shared by the respective communications while preventing the cellular communication from interfering with the D2D communication, and thus the system capacity of the wireless communication system 1 can be increased.

In other words, in the wireless communication system 1, the D2D communication and the cellular communication can efficiently coexist, and thus the wireless communication performance can be improved.

In the above example, the UL frequency resources have been described as an example of the radio resources that can be shared by the cellular communication and the D2D communication (that is, that may have interference), but the radio resources that can be shared by the cellular communication and the D2D communication may be the DL frequency resources or may be the time resources.

### REFERENCE NUMERALS LIST

- 1: wireless communication system
- 10: wireless base station
- 111: scheduler
- 111A: D2D scheduler
- 111B: PUSCH scheduler
- 112A: PDSCH generator
- 112B: PDCCH (UL grant) generator
- 113: physical channel multiplexer
- 114: transmission RF unit
- 115: transmission antenna
- 121: reception antenna
- 122: reception RF unit
- 123: PUSCH demodulator
- 20-1 to 20-N, 20C, 20D: mobile station (UE, DUE, CUE)
- 211, 212, 213: reception antenna
- 214, 215: transmission antenna
- 221, 222, 223: reception RF unit
- 224, 225: transmission RF unit
- 231: PDSCH demodulator
- 232: PDCCH demodulator
- 241: DS detector
- 242: PUSCH generator
- 251: D2D data signal demodulator
- 252: DS detector
- 253: DS response detector
- 261: scheduler
- 262: DS response generator
- 263, 271: DS generator
- 264: D2D data signal generator
- 265: switch
- 272: physical channel multiplexer

## Claims

1. A wireless communication system, comprising:
a wireless base station;
a first wireless device that performs wireless communication with the wireless base station;
a plurality of second wireless devices,
wherein the first wireless device transmits identification information of the first wireless device using a radio resource allocated for device-to-device communication, the device-to-device communication being performed between the second wireless devices without going through the wireless base station.

2. The wireless communication system according to claim 1,
wherein the second wireless device decodes allocation information of a radio resource, the allocation information being encoded by the wireless base station using the identification information and being transmitted to the first wireless device, using the identification information received from the first wireless device, and controls a radio resource to be used for the device-to-device communication to a radio resource not overlapping with a radio resource indicated by a decoded result of the allocation information.

3. The wireless communication system according to claim 1,
wherein the second wireless device transmits the identification information received from the first wireless device to the wireless base station, and
the wireless base station controls a radio resource to be used by the first wireless device to perform wireless communication with the wireless base station, the first wireless device being identified by the received identification information, to a radio resource not overlapping with the radio resource allocated for the device-to-device communication.

4. The wireless communication system according to claim 1,
wherein the second wireless device inhibits the device-to-device communication in response to a reception of the identification information transmitted by the first wireless device.

5. The wireless communication system according to claim 1,
wherein the second wireless device inhibits the device-to-device communication when the number of pieces of received identification information exceeds a threshold value.

6. The wireless communication system according to claim 1,
wherein the first wireless device puts the identification information of the first wireless device in a discovery signal to discover a wireless device that performs the device-to-device communication, and transmits the discovery signal.

7. A wireless communication method, comprising:
transmitting, by a first wireless device that performs wireless communication with a wireless base station, identification information of the first wireless device using a radio resource allocated for device-to-device communication, the device-to-device communication being performed between the second wireless devices without going through the wireless base station.

8. A wireless device that performs wireless communication with a wireless base station, the wireless device comprising:
a transmitter configured to transmit identification information of the wireless device using a radio resource allocated for device-to-device communication, the device-to-device communication being performed between other wireless devices without going through the wireless base station.

9. A wireless device serving as a second wireless device that performs device-to-device communication with a first wireless device without going through a wireless base station, the second wireless device comprising:
a receiver configured to receive identification information of a third wireless device, the identification information being transmitted by the third wireless device that performs wireless communication with the wireless base station using a radio resource allocated for the device-to-device communication.

10. The wireless device according to claim 9, further comprising,
a decoder configured to decode allocation information of a radio resource, the allocation information being encoded by the wireless base station using the identification information and being transmitted for the third wireless device, by using the identification information received by the receiver; and
a controller configured to control a radio resource to be used for the device-to-device communication to a radio resource not overlapping with a radio resource indicated by a decoded result of the allocation information.

11. The wireless device according to claim 9, further comprising,
a transmitter configured to transmit the identification information received by the receiver to the wireless base station.

12. The wireless device according to claim 9, further comprising,
a controller configured to inhibit the device-to-device communication in response to a reception of the identification information by the receiver.

13. The wireless device according to claim 9, further comprising,
a controller configured to inhibit the device-to-device communication when the number of pieces of identification information received by the receiver exceeds a threshold value.

14. A wireless base station that performs wireless communication with a wireless device, the wireless base station comprising:
a receiver configured to receive the identification information transmitted from the transmitter according to claim 11; and
a controller configured to control a radio resource to be used by the third wireless device to perform wireless communication with the wireless base station, the third wireless device being identified by the received identification information received by the receiver, to a radio resource not overlapping with the radio resource allocated for the device-to-device communication.
